# EUROPEAN PATENT SPECIFICATION

(11) **EP 0 514 649 B1**
(45) Date of publication and mention of the grant of the patent: **25.10.2000**
(21) Application number: 92105458.1
(22) Date of filing: 30.03.1992
(51) Int. Cl.: C08K 3/30, C08F 8/32, C08K 5/32

(54) **Stabilization of aqueous solutions of watersoluble polymers in the presence of hydroxylamine**
Stabilisierung von wässrigen Lösungen wasserlöslicher Polymere in Gegenwart von Hydroxylamin
Stabilisation des solutions aqueuses des polymères soluble dans l'eau en présence d'hydroxylamine

(30) Priority: 23.05.1991 US 704476
(43) Date of publication of application: 25.11.1992
(73) Proprietor: CYTEC TECHNOLOGY CORP., Wilmington, Delaware 19801 (US)
(72) Inventor: Heitner, Howard Ivan, Stamford, Connecticut 06905 (US); Lewellyn, Morris Eugene, Stratford, Connecticut 06497 (US)
(74) Representative: Allam, Peter Clerk

(56) References cited:
- EP-A- 0 104 970
- DE-A- 3 334 226
- US-A- 4 021 397

## Description

This invention relates to the stabilization of water-soluble polymers in the presence of hydroxylamine.

Water-soluble polymers are useful flocculating agents for many applications. It has been found that the best performance, in many cases, is obtained from high molecular weight polymers (typically >5M and particularly >10M molecular weight). However, in the past it has been observed that aqueous solutions of these polymers sometimes exhibit a loss in solution viscosity with time due to their method of production, e.g. they contain impurities such as catalysts, etc. This loss in viscosity is increased by elevated temperature. With this loss in viscosity, there is a corresponding loss in performance, presumably due to a degradation of polymer molecular weight. This inherent polymer degradation has been overcome in the past by the addition thereto of a multiplicity of different stabilizers, as set forth in the references cited hereinbelow. However, current technology has now enabled the production of polymers which do not undergo this inherent degradation and therefore, the need for stabilizer addition has been obviated. However, polymers which are produced or used in the presence of hydroxylamine tend to undergo a degradation which is solely induced by the presence of the hydroxylamine. When exploring the cause of this loss in viscosity, it was observed that aqueous solutions of vinyl polymers (such as polyacrylamide, copolymers of acrylamide with other vinyl monomers, acrylic acid, or the like) exhibited a rapid loss of viscosity in the presence of hydroxylamine or its salts. This was surprising since hydroxylamine and its salts are reported to be stabilizers and drying aids for acrylamide polymers (German Patent No. 2557325). During the hydroxamation of polyacrylamide or copolymers of acrylamide and other vinyl monomers, for example, by reacting the polymer with hydroxylamine or its salts, there is a residual amount of unreacted hydroxylamine or its salts which remain in the resulting product. This residual hydroxylamine has been found to be responsible for the rapid loss in viscosity observed for the aqueous solutions of such polymers.

Several compounds have been reported in the literature to be stabilizers for polyacrylamides. These include lower alcohols and ketones (U.S. Patent No. 3163619); thiocyanates (U.S. Patent No. 3234163); thiosulfates (U.S. Patent No. 3753939); 2-mercaptobenzothiazole and its salts and derivatives (Japanese Patent No. 74 27659 and Japanese Patent No. 62 177051); formic acid and its salts; potassium iodide; ammonium hydroxide (Japanese Patent No. 50 111139); thiourea and derivatives (Japanese Pat No. 74 027662; thiuram disulfide and its derivatives (Japanese Pat. No. 74 27661); sulfites; hydrosulfides or thiosulfates (Japanese Patent No. 77 29341); 2-mercaptobenzimidazole and its salts and derivatives (Japanese Patent No. 54 83048 and U.S. Patent No. 4393163); quinolinol and its salts; butylhydroxyanisoles; methoxyphenols; naphthoquinones (Japanese Patent No. 57 159839); various sulfur containing compounds such as N,N-dialkyldithiocarbamates; thiosemicarbasides; mercaptoalkanols; thioacid salts (U.S. Patent No. 4317758); phenyl phosphonic acid and its salts (Japanese Patent No. 61 136545); 2-mercaptothiazolines (Japanese Patent No. 62 184047) and 1-tolylbiquanide (Japanese Patent NO. 62 184048). Closely related are some cross-linking inhibitors used as drying aids for polyacrylamides which include cyanamide, succinimide, guanidine and urea (U.S. Patent No. 3622533).

These and other compounds have been evaluated as stabilizers in hydroxylamine containing water-soluble polymer systems and, surprisingly, only some have been found to be satisfactory stabilizers for this system. In accordance with the present invention, the (a) thiosulfate salts, (b) 2-mercaptothiazoles, (c) thiocyanates salts, (d) mercaptobenzimidazoles, (e) mercaptothiazolines, (f) N,N-dialkyldithiocarbamates, (g) thiuram disulfides, (h) dialkyl and diaryl dithiophosphates, (i) hydroquinones, (j) hydrosulfides, (k) quinolinols, (l) thioureas, (m) naphthoquinones, (n) mercaptoalkanols and (o) iodide salts which are defined more fully below have been found to be stabilisers for hydroxylamine containing water-soluble polymer systems against viscosity degradation.

The thiosulfates useful in the present invention are the water-soluble alkali metal, alkaline earth metal or ammonium thiosulfate salts, examples of which include sodium thiosulfate, potassium thiosulfate, ammonium thiosulfate, calcium thiosulfate and magnesium thiosulfate. The preferred thiosulfate is sodium thiosulfate.

The 2-mercaptothiazoles useful in the present invention are represented by the following formula: 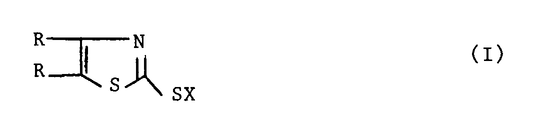 where R represents hydrogen atoms, lower hydrocarbon radicals e.g. C₁-C₄ alkyl, or together form a substituted or unsubstituted alicyclic or aromatic ring and X is hydrogen or a monovalent cation. Sodium, potassium and ammonium are exemplary cations. Cyclohexyl and benzyl are exemplary rings.

The thiocyanate stabilizers useful in the present invention are the water-soluble thiocyanate alkali metal, alkaline earth metal or ammonium salts, examples of which include sodium thiocyanate, potassium thiocyanate, ammonium thiocyanate, calcium thiocyanate and magnesium thiocyanate.

The useful mercaptobenzimidazoles of the present invention are represented by the following formula: 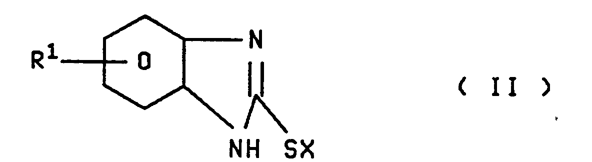 where R¹ represents a hydrogen atom or a lower alkyl radical and X represents a hydrogen atom or other monovalent cation, such as sodium, potassium, or ammonium. Examples of suitable hydrocarbon radicals include C₁ - C₄ alkyl radicals.

The useful mercaptothiazolines of the present invention are represented by the formula: 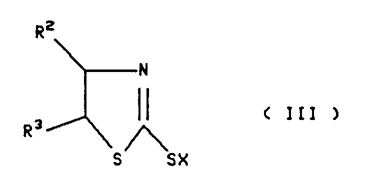 where X is as set forth above and R² and R³ are individually, hydrogen or C₁ - C₄ alkyl, or together form an alicyclic ring.

The useful N,N-dialkyldithiocarbamates of the present invention are represented by the formula: 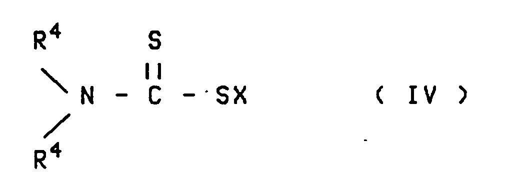 where each R⁴, individually, is an alkyl radical containing one to twelve carbon atoms or an aryl radical and X is as set forth above.

The useful thiuram disulfides of the present invention are represented by the formula: 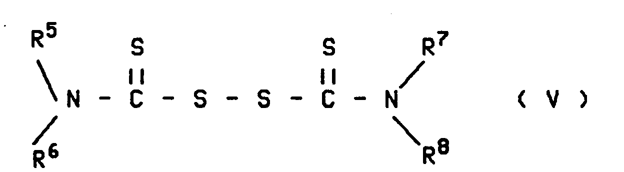 where R⁵, R⁶, R⁷ and R⁸ are H or an alkyl radical containing one to ten carbon atoms.

The dialkyl or diaryl dithiophosphates of the present invention are represented by the formula: 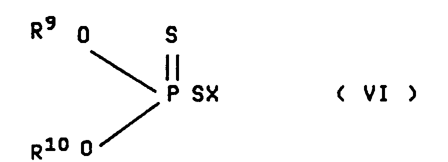 where R⁹ and R¹⁰ are alkyl radicals containing one to twelve carbon atoms or aromatic radicals and X is as indicated above.

The hydroquinones useful in the present invention are represented by the formula: 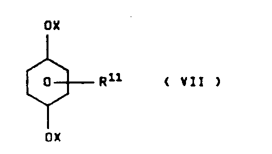 where R¹¹ represents a hydrogen atom or a lower alkyl radical and X is as indicated above.

Examples of the useful hydrosulfides of the present invention include hydrogen sulfide, sodium hydrosulfide, and disodium sulfide. The particular state of the salt will depend on the pH of the system. The potassium and ammonium salts are also suitable.

The useful quinolinols of the present invention are represented by the formula: 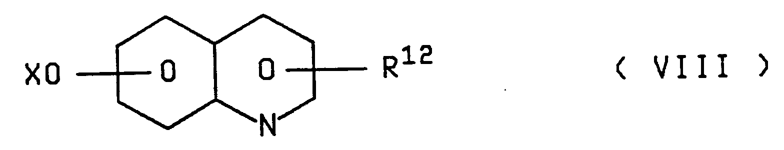 where R¹² represents one or more hydrogen atoms or lower hydrocarbon radicals and X is as indicated above. Examples are 8-quinolinol, 4-quinolinol, 2-methyl-8-quinolinol, and the like.

The use thioureas of the present invention are represented by the formula: 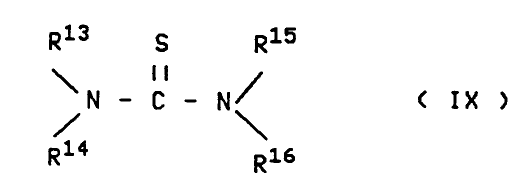 where R¹³, R¹⁴, R¹⁵ and R¹⁶ are H, an alkyl radical containing one to ten carbon atoms, or an aryl radical. Examples are thiourea, N,N'-diphenyl thiourea, diorthotolyl thiourea, ethylene thiourea, and the like.

The useful naphthoquinones of the present invention are represented by the formulae: 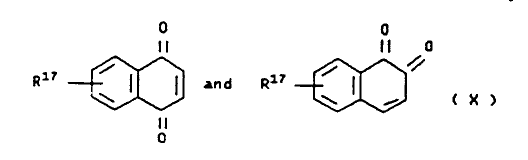 where R¹⁷ represents one or more hydrogen atoms or lower C₁ - C₄ alkyl radicals, such as ethyl radicals.

The useful mercaptoalkanols of the present invention are represented by the formula:

(HS)ₐ-R¹⁸-(OH)_{b} (XI)

where R¹⁸ represents a polyvalent alkylene radical containing 2 to 20 carbon atoms and a and b are integers of 1 to 3, the sum of a and b not exceeding 4. Examples include 2-mercaptoethanol, 2-mercaptopropanol, 2,11-dimercapto-1,12-dodecanediol, and the like.

Examples of useful iodide salts include potassium iodide, ammonium iodide, zinc iodide, magnesium iodide and the like. The alkali metal, alkaline earth metal and ammonium iodides are preferred.

The polymers from which the aqueous solutions of the present invention are formed are the water-soluble homopolymers, copolymers, terpolymers, etc. of one or more monomers containing a carbon-carbon double bond. These monomers include, but are not limited to, acrylamide, methacrylamide, acrylic acid or its alkali metal or ammonium salts, methacrylic acid or its salts, 2-acrylamido-2-methylpropane sulfonic acid or its salts, acrylic and methacrylic acid alkyl esters such as methyl acrylate, ethyl acrylate, butyl acrylate, ethyl methacrylate, methyl methacrylate, etc., vinyl acetate, vinyl pyrrolidone, styrene, acrylonitrile, maleic anhydride, esters of maleic acid, dimethylaminoethyl methacrylate and diallyldimethylammonium chloride, see U.S. Patent No. 4,902,751. Derivatives of the above polymers may also be used, such as for example, hydroxamated polymers which are prepared by reacting a polymer having a group reactive with hydroxylamine such as those containing amide, ester or anhydride groups. Acrylamide polymers are preferred.

The aqueous solutions of the water-soluble polymers can range in concentration from 0.1% to 95% polymer. By the term "solutions", as used herein, is meant to include those systems in the form of a dilute solution of the polymer in water, more concentrated solutions in the form of gels, and also gel particles dispersed in a nonaqueous medium such as found in inverse emulsions or microdispersions.

The hydroxylamine can be present in the polymer solutions in the form of its free base or as its salt, such as its hydrochloride or sulfate. The amount present can range from about 0.05 weight %, based on the weight of the polymer, to as much as about 200 weight %.

The aforesaid stabilizers can be used either alone or, if required, in a mixture of two or more. The amount of stabilizers or mixture of stabilizers will vary depending on the amount of hydroxylamine present. The amount can range from a low of 0.1 mole % (based on the polymer equivalent weight) to 100 mole %. Typical amounts range from 1 mole % to 20 mole %, same basis.

The type of the water to be used to form the polymer solution is not particularly restricted, and may be selected from sea water, river water, city water, industrial water, and the like.

The performance of the stabilizers is most conveniently monitored by following the viscosity of aqueous polymer solutions with time using a Brookfield viscometer. The Solution Viscosity of the polymer is defined as the viscosity of 0.1 % solution of the polymer in M NaCl at 25^{o}C using the Brookfield viscometer with the UL adapter at 60 rpm and is expressed in cps. The change in viscosity can be slow at room temperature; therefore, many of the following tests are conducted at elevated temperatures (40^{o} and 70^{o}C) in order to accelerate the aging process.

Incorporation of the stabilizer into the polymer solution may be performed by various methods. For example, the stabilizer can be added to the polymer solution before or after the addition of hydroxylamine, during the polymer production or after the reaction of the polymer with hydroxylamine. The stabilizer can also be added in conjunction with the hydroxylamine in an aqueous solution or dispersion. The effectiveness of the stabilizer is characterized by the fact that the aqueous polymer solution has a Solution Viscosity loss of less than 50% of its initial value after the stabilized solution has been aged at 40^{o}C for 90 days.

The following examples are set forth for purposes of illustration only. All parts and percentages are by weight unless otherwise specified.

### Example 1 (Comparative)

A hydroxamated polyacrylamide is prepared in a solution process from a dry polyacrylamide. 15 Parts of high molecular weight polyacrylamide in a dry powder form (82% active) are slowly added with stirring to 550 parts of water. The mixture is heated to 60-65^{o}C and stirred for 1-2 hr. until the solution is homogeneous. 15.6 Parts of hydroxylamine sulfate, 19.8 parts of 50% aqueous sodium hydroxide, and 74.6 parts of water are mixed separately with cooling. This solution is added to the polyacrylamide solution, and the combined mixture is heated to 80^{o}C for 1-2 hr. The resulting product has a hydroxamate content of 20-25% and a Solution Viscosity of 5-6 cps.

0.5% Solutions of the hydroxamated polyacrylamide in 1 M NaCl are made using this product. The solutions are kept at room temperature and at 40^{o}C and the bulk viscosity is measured periodically. This product exhibits significant decreases in viscosity at all pH's, with less decrease at the higher pH (Table 1). No stabilizer is used in this example.

**Table 1**

| **Solution Stability Studies** **0.5% Solutions** | | | | | | | | | | |
|---|---|---|---|---|---|---|---|---|---|---|
| | | | Viscosity (cps) | | | | | | | |
| pH | Temp.(°C) | Time (Days): | 0 | 1 | 3 | 14 | 23 | 31 | 36 | 46 |
| 4.0 | RT | | 35.7 | 33.5 | | 11.4 | 6.5 | | 5.6 | 5.2 |
| 6.0 | RT | | 52.0 | 49.7 | | 27.1 | 16.1 | | 13.5 | 11.8 |
| 8.0 | RT | | 45.2 | 29.6 | | 8.4 | 5.9 | | 5.3 | 4.5 |
| 10.0 | RT | | 50.2 | 46.0 | | 21.5 | 13.0 | | 11.0 | 9.7 |
| 12.0 | RT | | 55.6 | 50.3 | | 19.9 | 12.5 | | 10.7 | 9.1 |
| 4.0 | 40 | | 35.7 | 13.3 | 5.9 | 4.3 | 4.0 | 3.5 | | 3.4 |
| 6.0 | 40 | | 52.0 | 30.6 | 16.5 | 8.1 | 5.8 | 5.0 | | 3.9 |
| 8.0 | 40 | | 45.2 | 18.4 | 14.1 | 6.7 | 5.0 | 4.0 | | 3.3 |
| 10.0 | 40 | | 50.2 | 32.9 | 18.0 | 7.2 | 5.3 | 4.6 | | 3.5 |
| 12.0 | 40 | | 55.6 | 46.0 | 32.1 | 12.8 | 6.9 | 5.5 | | 4.5 |

### Example 2 (Comparative)

A solution of hydroxamated polyacrylamide, prepared in a similar manner to Example 1 at 2% concentration, is monitored at various pHs without dilution (Table 2). At all pHs and temperatures, the bulk viscosity decreases significantly for all samples.

### Example 3 (Comparative)

Solutions of starting polyacrylamide backbones are treated with hydroxylamine (45 mole % based on the polyacrylamide monomer) and the viscosities are monitored with time at room temperature and 40^{o}C. The high molecular weight polyacrylamide backbones used are an inverse emulsion polyacrylamide (Table 3) and a dry polyacrylamide (Table 4). The results show a dramatic decrease in viscosity for all the solutions treated with hydroxylamine. These results indicate that the hydroxylamine has a significant detrimental effect on the stability of the viscosity of the polymer solutions. Again, no stabilizer is used.

**Table 2**

| **Solution Stability Studies** **2.0% solutions** | | | | | | | | | |
|---|---|---|---|---|---|---|---|---|---|
| | | | Viscosity (cps) | | | | | | |
| pH | Temp.(°C) | Time (Days): | 0 | 1 | 2 | 3 | 4 | 7 | 21 |
| 4.1 | RT | | 2160 | 1940 | 1910 | 1900 | 1880 | 1780 | 1580 |
| 6.1 | RT | | 4660 | 4610 | 4600 | 4560 | 4540 | 4310 | 3370 |
| 8.0 | RT | | 5870 | 5770 | 5650 | 5530 | 5350 | 4900 | 3060 |
| 10.1 | RT | | 8430 | 7840 | 7350 | 6620 | 6600 | 5320 | 6010 |
| 4.1 | 40 | | 2160 | 1710 | 1490 | 1300 | 1100 | 650 | 40 |
| 6.1 | 40 | | 4660 | 4410 | 4010 | 3740 | 3330 | 2400 | 430 |
| 8.0 | 40 | | 5870 | 5450 | 4250 | 4650 | 3540 | 2630 | 840 |
| 10.1 | 40 | | 8430 | 5350 | 3130 | 3790 | 2610 | 3250 | 1430 |

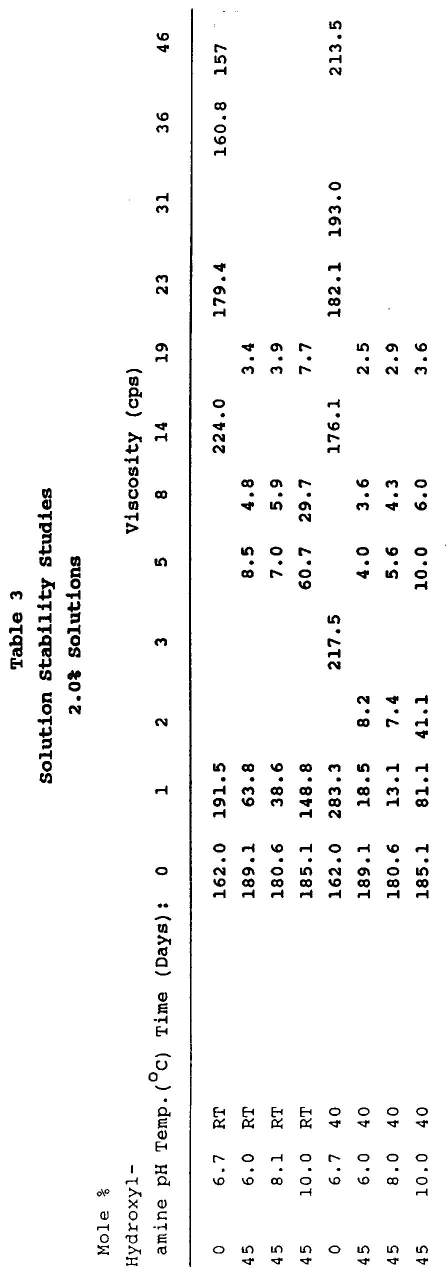

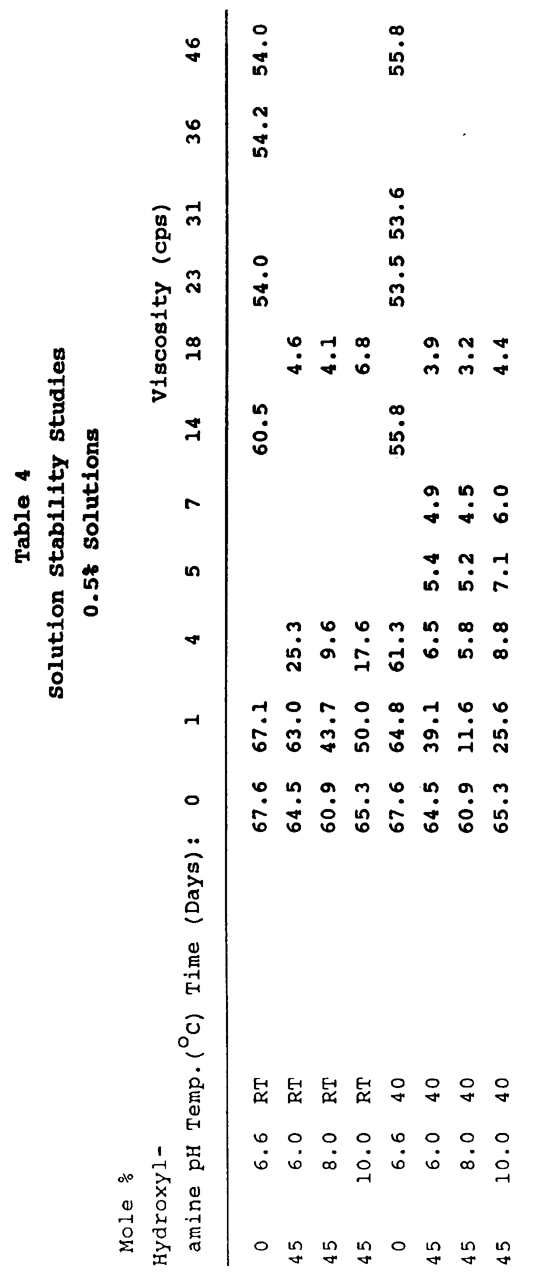

### Example 4 (Comparative)

Using the polyacrylamide solution of Example 4 to better examine the effect of the hydroxylamine on the viscosity and to demonstrate the stabilization effect of stabilizer to counteract this effect, (Table 5), sodium thiosulfate stabilizer is added to the solution. The dosage of hydroxylamine alone is varied, with the results showing a definite relationship of the amount of hydroxylamine and the viscosity degradation for the 0.5% polymer solution. With 45 mole % hydroxylamine, the thiosulfate is varied from 5 to 15 mole %. The results show that the more thiosulfate is present, in the presence of hydroxylamine, the less reduction in viscosity is observed. The control with no additive or hydroxylamine present in stable.

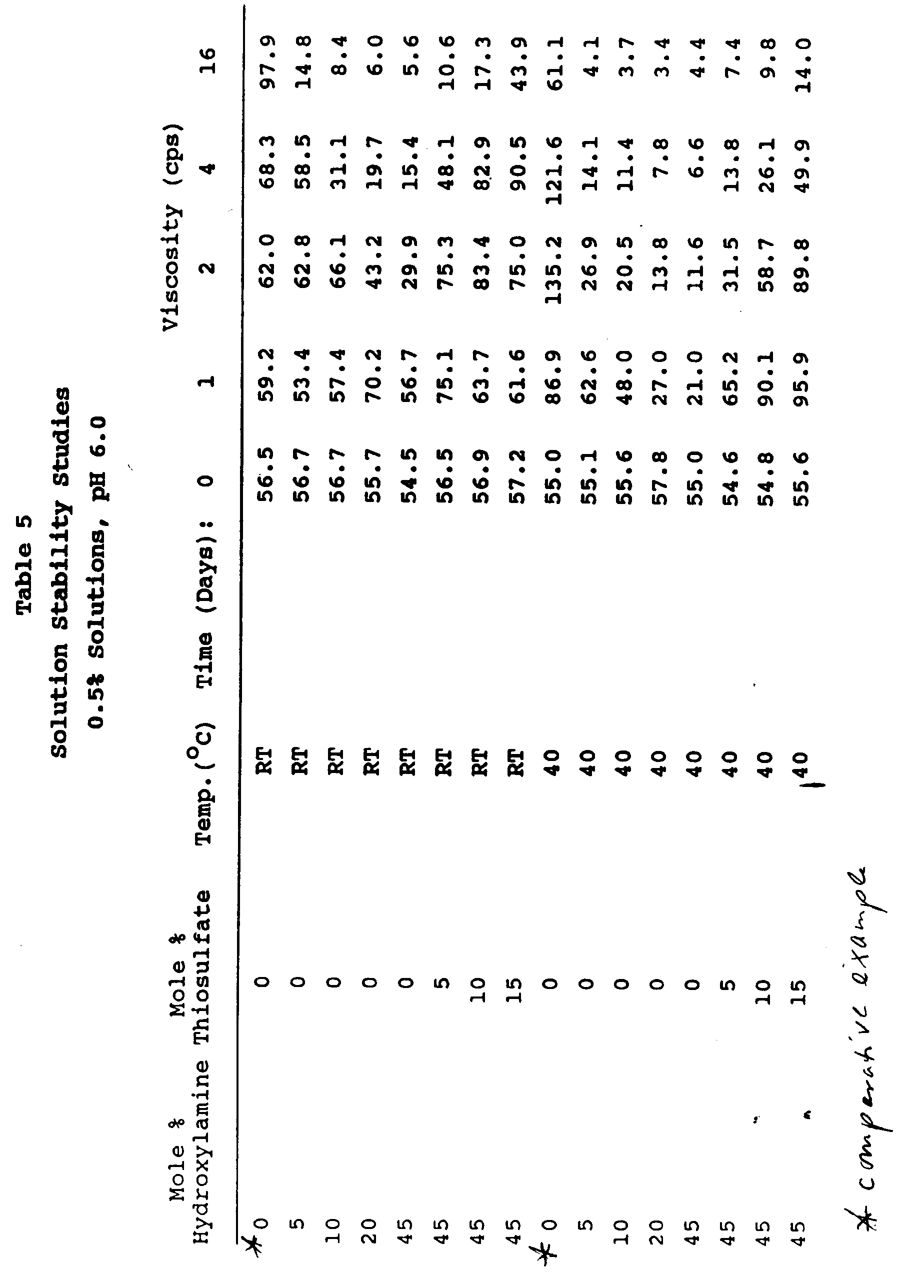

### Example 5

The effect of various stabilizers in the hydroxamation of a high molecular weight polyacrylamide is evaluated. The tests are carried out at 2% polymer concentration and 70°C overnight, with 1.0 mole of hydroxylamine per mole of amide and 0.5 mole sodium acetate. The stabilizers are added at 10 and 20 mole %, based on the amide, with the results summarized in Table 6. Sample 3 of Table 6 shows a significant decrease in viscosity during the hydroxamation reaction, whereas sample 1 without any additives and sample 2, ammonium sulfate, show no decrease in viscosity. This again shows that the presence of hydroxylamine leads to a significant reduction in viscosity. However, the use of sodium thiosulfate, sodium thiocyanate, potassium iodide and mercaptobenzothiazole in the presence hydroxylamine gives good stabilization of viscosity. Note that known acrylamide polymer stabilizers sodium formate, sodium hypophosphite and methanol are very poor in these tests.

**Table 6**

| **Stability Studies** **2% Polymer, 70°C, Overnight** | | | | |
|---|---|---|---|---|
| Sample | | Mole % Stabilizer | Viscosity Initial | (cps)¹ Final |
| 1.* | No additives | | 3330 | 3280 |
| 2.* | NaOAC, (NH₄)₂SO₄ | | 3260 | 3330 |
| 3.* | NaOAc, H₂NOH Sulfate² | | 3290 | 260 |
| 4. | Sodium Thiosulfate | 10 | 3320 | 4100 |
| | Sodium Thiosulfate | 20 | 3420 | 3710 |
| 5. | Potassium Iodide | 10 | 3380 | 3670 |
| 6. | Sodium Thiocyanate | 10 | 3300 | 3920 |
| 7.* | Sodium Formate | 10 | 3340 | 510 |
| | Sodium Formate | 20 | 3300 | 1150 |
| 8. | 8-Hydroxyquinoline³ | 10 | 3440 | -- |
| 9. | Mercaptobenzothiazole | 10 | 3400 | 4110 |
| | Mercaptobenzothiazole | 20 | 3500 | 4160 |
| 10.* | Sodium Hypophosphite | 10 | 3380 | 1020 |
| | Sodium Hypophosphite | 20 | 3220 | 1580 |
| 11.* | Methanol | 10 | 3340 | 480 |
| | Methanol | 20 | 3410 | 680 |
| 12. | Hydroquinone | 10 | 3280 | 1690 |
| | Hydroquinone | 20 | 3280 | 2360 |

| | | | | |
|---|---|---|---|---|
| ¹Brookfieid LVT, Spindle #3, 30 rpm, 25'C. | | | | |
| ²0.5 Mole sodium acetate and 1.0 mole hydroxylamine used in tests 3-10. | | | | |
| ³Sample crystallized and no final measurements were made. | | | | |
| * Comparative example | | | | |

### Example 6

The effect of various stabilizers on the stability of hydroxamated polyacrylamide is examined (Table 7). The Solution Viscosity (S.V.) is determined before and after aging overnight at 70°C for a 2% polymer solution. The hydroxamate level is generally 20-22%. Note that known stabilizers sodium formate, methanol, and urea are again very poor in these tests.

**Table 7**

| **Stability Studies**^{**1**} | | | | |
|---|---|---|---|---|
| Sample | | Stabilizer | Mole % Stabilizer | Final S.V. |
| 1.* | No H₂NOH | None | | 4.70 |
| 2.* | 100 Mole % H₂NOH | None | | 3.52 |
| 3. | 100 Mole % H₂NOH | Sodium Thiosulfate | 10 | 5.37 |
| 4. | 100 Mole % H₂NOH | Sodium Thiosulfate | 20 | 5.56 |
| 5. | 100 Mole % H₂NOH | Potassium Iodide | 10 | 4.19 |
| 6. | 100 Mole % H₂NOH | Potassium Iodide | 20 | 4.55 |
| 7. | 100 Mole % H₂NOH | Sodium Thiocyanate | 10 | 4.27 |
| 8. | 100 Mole % H₂NOH | Sodium Thiocyanate | 20 | 5.11 |
| 9.* | 100 Mole % H₂NOH | Sodium Formate | 10 | 4.07 |
| 10.* | 100 Mole % H₂NOH | Sodium Formate | 20 | 3.67 |
| 11. | 100 Mole % H₂NOH | Mercaptobenzothiazole | 10 | 5.45 |
| 12. | 100 Mole % H₂NOH | Mercaptobenzothiazole | 20 | 4.40 |
| 13.* | 100 Mole % H₂NOH | Sodium Metabisulfite | 10 | 4.64 |
| 14.* | 100 Mole % H₂NOH | Sodium Metabisulfite | 20 | 4.40 |
| 15.* | 100 Mole % H₂NOH | Sodium Hypophosphite | 10 | 3.89 |
| 16.* | 100 Mole % H₂NOH | Sodium Hypophosphite | 20 | 4.27 |
| 17.* | 100 Mole % H₂NOH | Methanol | 10 | 4.04 |
| 18.* | 100 Mole % H₂NOH | Methanol | 20 | 4.10 |
| 19.* | 100 Mole % H₂NOH | Urea | 10 | 3.23 |
| 20.* | 100 Mole % H₂NOH | Urea | 20 | 3.68 |
| 21. | 100 Mole % H₂NOH | Hydroquinone | 10 | 4.46 |
| 22. | 100 Mole % H₂NOH | Hydroquinone | 20 | 4.50 |

| | | | | |
|---|---|---|---|---|
| * Comparative example | | | | |
| ¹ = NaOH to H₂NOH = 1.3:1.0 | | | | |

### Example 7

Another hydroxamated polyacrylamide is prepared in a similar manner to Example 1. The reaction is carried out at a higher concentration (4% based on acrylamide) and at 60°C for 3 hr. The reaction product is then diluted without purification to 2.3% with water. The polymer has a hydroxamate content of 35.9% and the solution has a Solution Viscosity of 7.5 cps and is used for long term stability studies. Various compounds are then added, with dilution water, to end up with a 2% polymer concentration. The Solution Viscosity of these samples is monitored with time at room temperature and at 40°C (Table 8).

The solution Viscosity for the control shows a steady decline both at room temperature and at 40°C. Hydroquinone, sodium thiosulfate and mercaptobenzothiazole prevent degradation.

The hydroxamate content of the polymers for this series of tests are examined 6 and 20 days after the reagents are added (Table 9). These results show that the hydroxamate content decreases significantly for the some samples relative to the control (which shows some decrease at 40^{o}C). The residual hydroxylamine is also measured after 2 and 20 days (Table 10). These results show that some compounds lower the hydroxylamine content but still are ineffective stabilizers. It is also interesting to note in that with time there is a significant reduction in hydroxylamine in the control, while the hydroxylamine in some of the treated samples does not decrease.

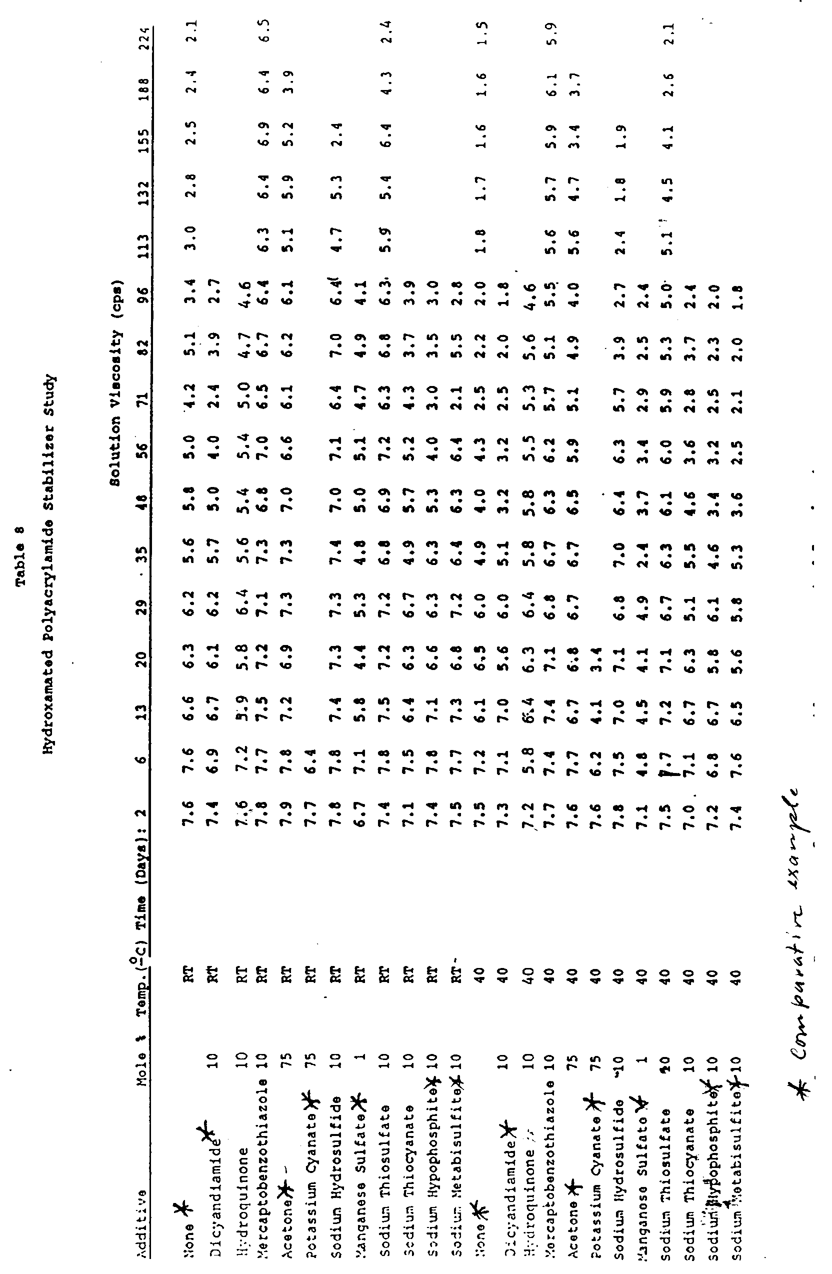

These samples are also among the more stable in terms of Solution Viscosity.

**Table 9**

| Hydroxamated PAM Stabilizer Study | | | | |
|---|---|---|---|---|
| Additive | | | Percent Hydroxamate¹ | |
| | Room Temperature | | 40°C | |
| | 6 Days | 20 Days | 6 Days | 20 Days |
| None* | 38.4 | 39.0 | 37.4 | 29.7 |
| Dicyandiamide* | 36.8 | 35.4 | 35.2 | 26.5 |
| Mercaptobenzothiazole | 38.2 | 37.3 | 36.2 | 28.7 |
| Acetone* | 32.9 | 27.3 | 25.0 | 22.3 |
| Potassium Cyanate* | 36.4 | -- | 11.3 | -- |
| Sodium Hydrosulfide | 38.8 | 39.2 | 37.7 | 31.3 |
| Manganese II Sulfate* | 36.2 | 27.5 | 35.8 | 21.4 |
| Sodium Thiosulfate | 37.3 | 37.7 | 37.5 | 32.3 |
| Sodium Thiocyanate | 38.3 | 36.5 | 37.0 | 30.6 |
| Sodium Hypophosphite* | 38.4 | 36.7 | 36.8 | 29.7 |
| Sodium Metabisulfite* | 37.4 | 32.4 | 33.6 | 25.4 |

| | | | | |
|---|---|---|---|---|
| ¹Determined by colorimetric method. | | | | |
| * Comparative example | | | | |

**Table 10**

| Hydroxamated PAM Stability Tests Residual Hydroxylamine | | | | |
|---|---|---|---|---|
| | Percent Hydroxylamine Remaining | | | |
| | Room Temperature | | 40°C | |
| Additive | 6 Days | 20 Days | 6 Days | 20 Days |
| None* | 60.3 | 24.3 | 54.9 | 28.2 |
| Dicyanamide* | 51.8 | 11.8 | 53.9 | 10.9 |
| Mercaptobenzothiazole | 58.8 | 33.6 | 61.0 | 42.9 |
| Acetone* | 47.1 | 58.8 | 53.5 | 55.0 |
| Potassium Cyanate* | 36.4 | -- | 24.0 | -- |
| Sodium Hydrosulfide | 58.8 | 51.3 | 57.8 | 56.7 |
| Manganese II Sulfate* | 53.7 | 4.5 | 53.5 | 7.5 |
| Sodium Thiosulfate | 59.0 | 53.5 | 58.4 | 54.5 |
| Sodium Thiocyanate | 54.0 | 33.6 | 53.9 | 39.6 |
| Sodium Hypophosphite* | 58.8 | 19.3 | 56.7 | 24.9 |
| Sodium Metabisulfite* | 48.1 | 27.8 | 52.4 | 32.7 |
| Hydroquinone | 27.0 | 4.3 | 33.4 | 3.7 |

| | | | | |
|---|---|---|---|---|
| * Comp. example | | | | |

### Example 8

Another series of tests is conducted to determine the effect of varying amounts of sodium thiosulfate on the stability of the Solution Viscosity of hydroxamated polyacrylamide (Table 11). For this series, the hydroxamated polyacrylamide is made in the same manner as Example 7. The results indicate that stabilization can be obtained with 1 mole % of sodium thiosulfate; although, more consistent stability is obtained with 5 mole % and above.

**Table 11**

| Sodium Thiosulfate Stabilizer Study Hydroxamated Polyacrylamide Concentration 3.0% | | | | | | | | | | |
|---|---|---|---|---|---|---|---|---|---|---|
| | | | Solution Viscosity (cps) | | | | | | | |
| Mole % Thiosulfate | Temp.(°C) | Time (Days): | 1 | 9 | 22 | 43 | 67 | 79 | 106 | 160 |
| *0 | RT | | 5.3 | 4.6 | 4.4 | 3.3 | 4.9 | 5.0 | 3.6 | 2.0 |
| 1 | RT | | 5.3 | 6.1 | 5.0 | 5.6 | 5.3 | 4.2 | 4.1 | 3.0 |
| 3 | RT | | 5.3 | 5.3 | 5.5 | 6.0 | 5.7 | 5.8 | 4.4 | 4.7 |
| 5 | RT | | 5.3 | 5.7 | 5.2 | 6.4 | 5.7 | 5.7 | 5.9 | 5.0 |
| 7 | RT | | 5.3 | 5.0 | 5.0 | 6.1 | 5.5 | 5.8 | 5.8 | 5.0 |
| 10 | RT | | 5.3 | 5.8 | 5.2 | 6.3 | 6.3 | 6.3 | 6.0 | 6.4 |
| *0 | 40 | | 5.3 | | 2.8 | 2.4 | 3.8 | 2.8 | 2.4 | 1.8 |
| 1 | 40 | | 5.3 | | 5.0 | 6.2 | 5.4 | 5.0 | 5.5 | 4.3 |
| 3 | 40 | | 5.3 | | 5.0 | 6.2 | 6.4 | 5.7 | 2.5 | 2.5 |
| 5 | 40 | | 5.3 | | 5.5 | 6.1 | 6.2 | 5.6 | 5.4 | 4.8 |
| 7 | 40 | | 5.3 | | 5.9 | 6.3 | 6.6 | 6.0 | 6.0 | 5.1 |
| 10 | 40 | | 5.3 | | 5.3 | 6.1 | 6.0 | 6.0 | 5.6 | 5.2 |

| | | | | | | | | | | |
|---|---|---|---|---|---|---|---|---|---|---|
| * Comparative example | | | | | | | | | | |

### Example 9

A solution of a hydroxamated polymer is prepared from an inverse emulsion acrylamide-acrylic acid copolymer (97:3). Into a suitable reaction vessel are charged 50.8 parts of hydroxylamine sulfate and 777.5 parts of water. To this are added, with stirring, 172.6 parts of an emulsion copolymer (25.5% active). This mixture is heated to 60^{o}C and 99.2 parts of 50% NaOH are added quickly. The mixture is stirred until the emulsion breaks and a gel forms. Heating at 60^{o}C is continued for 3 hours, followed by the addition of 900 parts of water to give a 2.2% polyacrylamide concentration. The hydroxamate content of the polymer is 49.8%.

This hydroxamated polymer is used for long term stability studies where various additives are added at a level of 10 mole % with dilution water to give 2% polymer concentrations in solution. The Solution Viscosities of these samples are monitored over a period of time at room temperature and at 40^{o}C (Table 12).

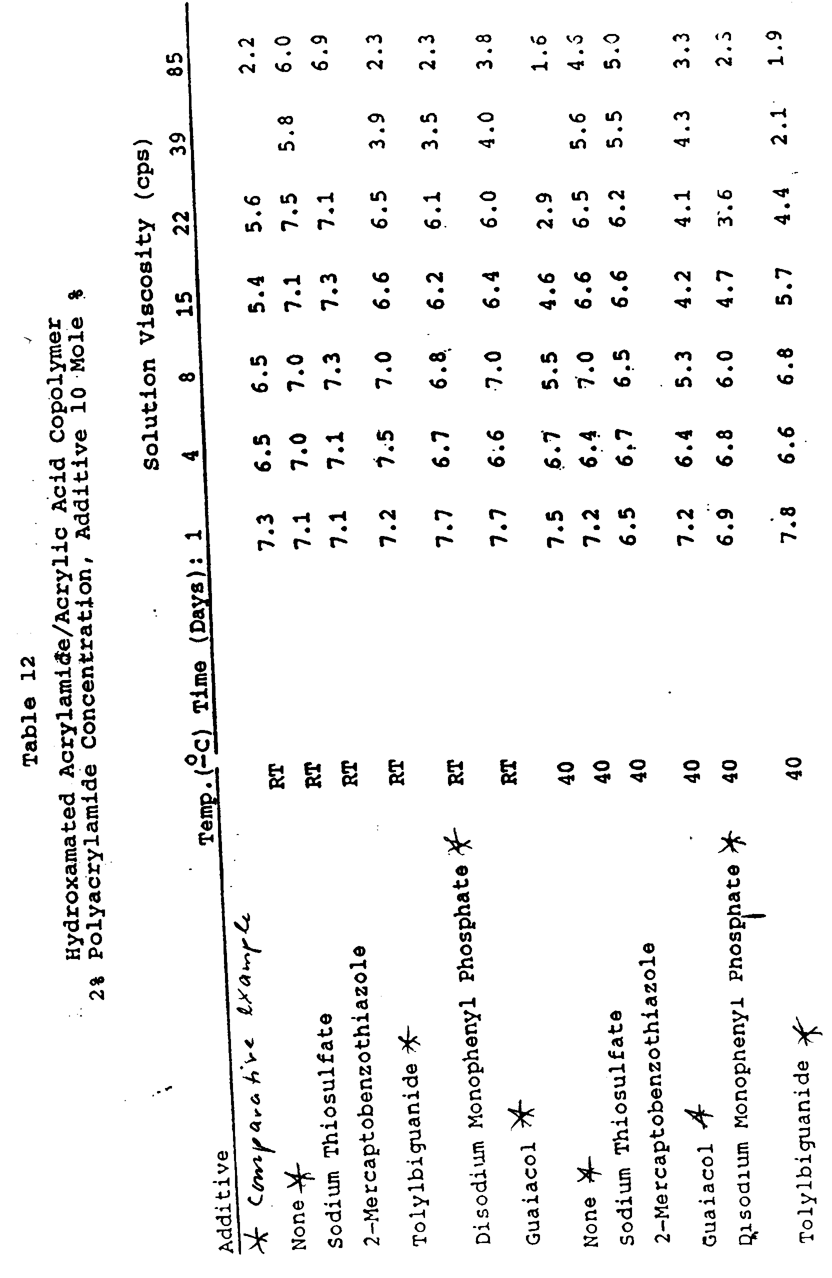

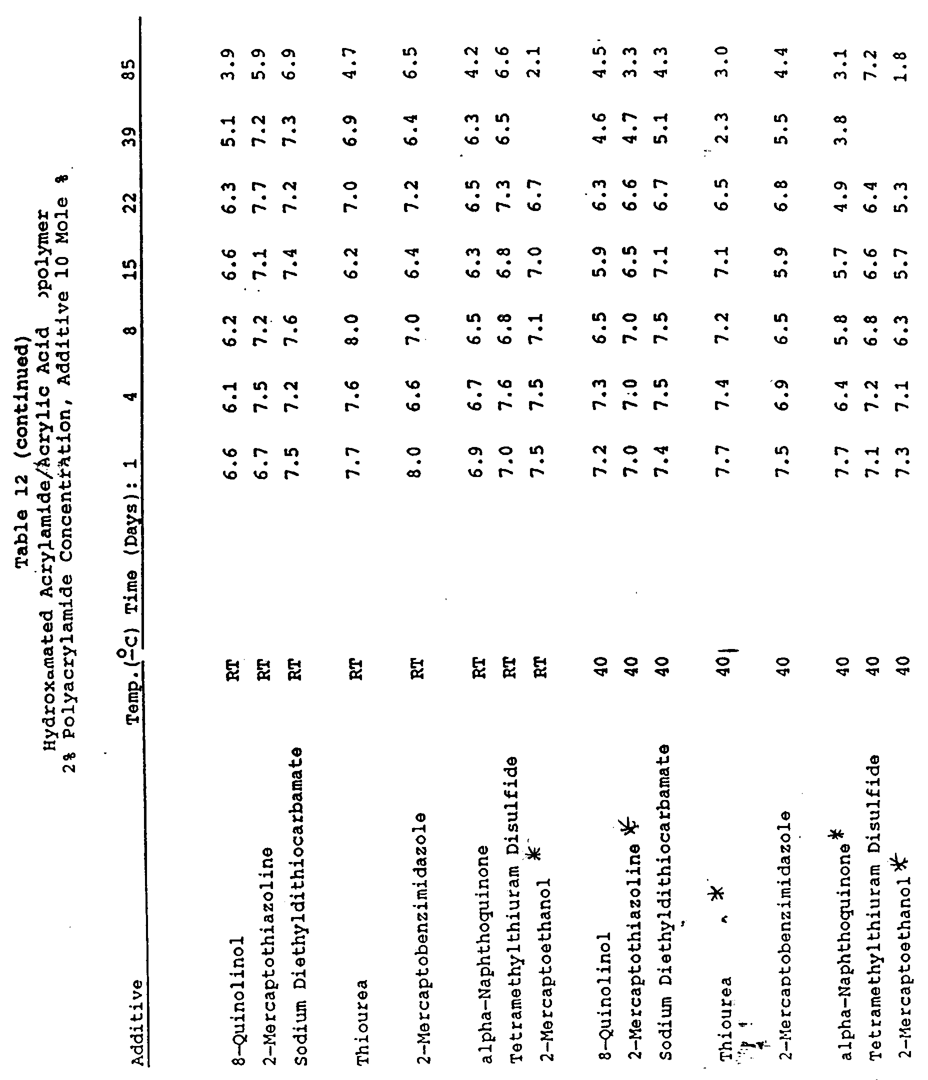

### Example 10

Accelerated aging tests are conducted in which a series of vessels is charged with 7.84 parts of an acrylamide polymer inverse emulsion, 2.30 parts of hydroxylamine sulfate (10 mole percent based on polymer), stabilizer (10 mole%), and water to give a final polymer concentration of 2.0%. With stirring, 4.48 parts of 50% NaOH are added followed by 0.5 part of surfactant to break the emulsion and give a gel. The vessels are placed in an oven at 70^{o}C and the Solution Viscosities are monitored. The results are shown in Table 13.

**Table 13**

| Hydroxamated Polyacrylamide Stabilizer Study 2% Polyacrylamide Concentration, Additive 10 Mole %, 70° C | | | | | | |
|---|---|---|---|---|---|---|
| | | Solution Viscosity (cps) | | | | |
| Additive | Time (Days): | 1 | 2 | 5 | 9 | 12 |
| None* | | 7.1 | 3.9 | 2.2 | 2.3 | 1.8 |
| Sodium Thiosulfate | | 7.4 | 7.2 | 4.4 | 4.4 | 4.4 |
| 2-Mercaptobenzothiazole | | 7.9 | 5.2 | 5.4 | 5.3 | 5.3 |
| Tolylbiguanide* | | 8.3 | 7.2 | 4.6 | 2.8 | 2.6 |
| Guaicol* | | 7.7 | 4.3 | 3.1 | 3.4 | 3.1 |
| Disodium Monophenyl Phosphate* | | 6.5 | 4.8 | 2.4 | 2.0 | 1.9 |
| 8-Quinolinol* | | 7.2 | 7.9 | 5.4 | 4.7 | 3.1 |
| 2-Mercaptothiazoline | | 7.2 | 9.8 | 4.2 | 3.9 | 3.9 |
| Sodium Diethyldithiocarbamate | | 8.9 | 5.8 | 4.2 | 4.2 | 4.5 |
| Thiourea* | | 7.0 | 8.1 | 5.9 | 4.0 | 3.2 |
| 2-Mercaptobenzimidazole* | | 8.1 | 7.3 | 6.1 | 6.0 | 3.1 |
| alpha-Naphthoquinone | | 6.3 | 7.1 | 5.8 | 5.3 | 4.4 |
| Tetramethylthiuram Disulfide | | 9.2 | 6.7 | 8.3 | 6.4 | 6.4 |
| 2-Mercaptoethanol* | | 8.6 | 6.7 | 5.1 | 3.6 | 3.1 |
| Sodium Diethyl Dithiophosphate* | | 9.5 | 5.6 | 5.3 | 5.1 | 4.6 |

| | | | | | | |
|---|---|---|---|---|---|---|
| * Comparative example | | | | | | |

### Example 11

In another series of tests, a 2% solution of the homopolymer of the ammonium salt of acrylic acid is treated with 50 mole % of hydroxylamine. The Solution Viscosity is monitored at room temperature and 40^{o}C both in the presence and absence of sodium thiosulfate (Table 14). The results show that sodium thiosulfate is a satisfactory stabilizer for this system.

**Table 14**

| **Stabilizer Study** 2% Polyacrylate Concentration, 50 Mole % Hydroxylamine, Additive 10 Mole % | | | | | | | | | |
|---|---|---|---|---|---|---|---|---|---|
| | | | Solution Viscosity (cps) | | | | | | |
| Additive | Temp. (°C) | Time (Days): | 0 | 1 | 4 | 8 | 11 | 32 | 69 |
| None* | RT | | 6.1 | 5.2 | 5.3 | 4.2 | 2.2 | 3.2 | 2.9 |
| Sodium Thiosulfate | RT | | 6.1 | 6.1 | 6.3 | 6.1 | 5.3 | 5.3 | 4.7 |
| None* | 40 | | 6.1 | 4.0 | 3.9 | 3.2 | 2.9 | 2.3 | 1.9 |
| Sodium Thiosulfate | 40 | | 6.1 | 5.9 | 5.1 | 4.9 | 5.0 | 4.4 | 3.8 |

| | | | | | | | | | |
|---|---|---|---|---|---|---|---|---|---|
| * Comparative example | | | | | | | | | |

### Example 12

Following the procedure set forth in Example 9, another series of stability tests is carried out at room temperature and 40^{o}C (Table 15).

**Table 15**

| Hydroxamated Polyacrylamide Stabilizer Study 2% Polyacrylamide Concentration, Additive 10 Mole % | | | | | | | | | |
|---|---|---|---|---|---|---|---|---|---|
| | | | Solution Viscosity (cps) | | | | | | |
| Additive | Temp. (°C) | Time (Days): | 1 | 5 | 9 | 15 | 21 | 29 | 49 |
| None* | RT | | 9.9 | 8.2 | 7.8 | 7.9 | 7.6 | 6.4 | 5.1 |
| Sodium Thiosulfate | RT | | 9.7 | 9.2 | 9.1 | 9.2 | 9.5 | 9.2 | 8.7 |
| None* | 40 | | 9.4 | 9.4 | 5.8 | 5.0 | 4.1 | 2.4 | 2.2 |
| Sodium Thiosulfate | 40 | | 9.0 | 9.1 | 8.8 | 8.8 | 8.8 | 8.8 | 7.7 |
| 8-Quinolinol | RT | | 8.9 | 8.0 | 7.7 | 7.6 | 7.8 | 7.6 | 6.0 |
| 2-Mercaptothiazoline | RT | | 9.7 | | 9.4 | 9.6 | 9.6 | 9.5 | 9.1 |
| Sodium Diethyldithiophosphate | RT | | 9.5 | 9.5 | 8.2 | 8.4 | 8.3 | 8.2 | 7.6 |
| 8-Quinolinol | 40 | | 9.0 | 7.2 | 6.8 | 6.1 | 5.0 | 5.2 | 5.1 |
| 2-Mercaptothiazoline | 40 | | 9.2 | 9.5 | 9.5 | 9.6 | 9.6 | 9.3 | 5.5 |
| Sodium Diethyldithiophosphate | 40 | | 8.5 | 8.6 | 8.6 | 8.6 | 7.6 | 7.6 | 5.9 |

| | | | | | | | | | |
|---|---|---|---|---|---|---|---|---|---|
| * Comparative example | | | | | | | | | |

### Example 13

Using the same procedure as set forth in Example 10, another series of accelerated aging tests is conducted at 70^{o}C (Table 16).

**Table 16**

| Hydroxamated Polyacrylamide Stabilizer Study 2% Polyacrylamide Concentration, Additive 10 Mole %, 70° C | | | | | | | |
|---|---|---|---|---|---|---|---|
| | | Solution Viscosity (cps) | | | | | |
| Additive | Time (Days): | 1 | 4 | 9 | 14 | 21 | 28 |
| None* | | 5.7 | 4.7 | 2.3 | 2.0 | 1.9 | 1.6 |
| Sodium Thiosulfate | | 8.1 | 7.4 | 5.6 | 4.6 | 4.1 | 4.1 |
| 8-Quinolinol | | 7.3 | 6.9 | 4.5 | 4.1 | 4.5 | 4.5 |
| 2-Mercaptothiazoline* | | 7.6 | 6.9 | 4.6 | 3.9 | 3.6 | 3.3 |
| 2-Mercaptobenzimidazole | | 7.0 | 6.3 | 5.4 | 5.6 | 4.8 | 4.6 |
| alpha-Naphthaquinone* | | 7.6 | 7.4 | 3.5 | 3.2 | 3.1 | 2.7 |
| Sodium Diethyl Dithiophosphate* | | 6.9 | 6.1 | 4.3 | 3.7 | 3.2 | 3.0 |

| | | | | | | | |
|---|---|---|---|---|---|---|---|
| * Comparative example | | | | | | | |

### Example 14

Using the same procedure set forth in Example 10, another series of accelerated aging tests is conducted at 7^{o}C (Table 17). Note that the known polyacrylamide stabilizer phenylphosphonic acid salt is very poor in these tests.

**Table 17**

| Hydroxamated Polyacrylamide Stabilizer Study 2% Polyacrylamide Concentration, Additive 10 Mole %, 70° C | | | | | |
|---|---|---|---|---|---|
| | | Solution Viscosity (cps) | | | |
| Additive | Time (Days): | 3 | 6 | 15 | 20 |
| None | | 4.3 | 2.3 | 1.4 | 1.6 |
| Sodium Thiosulfate | | 4.5 | 4.7 | 3.8 | 2.8 |
| Disodium Phenylphosphonate* | | 5.1 | 2.6 | 2.2 | 2.1 |

| | | | | | |
|---|---|---|---|---|---|
| * Comp. example | | | | | |

### Example 15

A 0.1% solution of an acrylamide-acrylic acid copolymer (97:3) is treated with hydroxylamine as in Example 3. The Solution Viscosity is monitored at room temperature and 40^{o}C both in the presence and absence of sodium thiosulfate (Table 18). The results show that sodium thiosulfate is a stabilizer even at this low concentration.

**Table 18**

| Stabilizer Study 0.1% Polyacrylamide Concentration | | | | | | | | |
|---|---|---|---|---|---|---|---|---|
| | | | | Solution Viscosity | | | | |
| Mole % Hydroxylamine | Mole % Na Thiosulfate | Temp.(°C) | Time (Days): | 0 | 1 | 6 | 10 | 16 |
| 0* | 0 | RT | | 5.7 | 4.4 | 4.5 | 4.5 | 4.6 |
| 20* | 0 | RT | | 5.7 | 2.9 | 1.9 | 1.9 | 1.9 |
| 40* | 0 | RT | | 5.7 | 3.9 | 2.6 | 2.5 | 2.5 |
| 20 | 20 | RT | | 5.7 | 6.0 | 6.2 | 6.2 | 6.3 |
| 40 | 20 | RT | | 5.7 | 5.8 | 6.2 | 6.2 | 6.3 |
| 0* | 0 | 40 | | 5.7 | 4.0 | 4.5 | 4.7 | 4.8 |
| 20* | 0 | 40 | | 5.7 | 2.1 | 2.3 | 2.3 | 2.4 |
| 40* | 0 | 40 | | 5.7 | 2.6 | 2.1 | 2.1 | 2.2 |
| 20 | 20 | 40 | | 5.7 | 6.0 | 5.6 | 4.8 | 3.7 |
| 40 | 20 | 40 | | 5.7 | 6.2 | 7.0 | 6.5 | 5.7 |

| | | | | | | | | |
|---|---|---|---|---|---|---|---|---|
| * Comparative examples | | | | | | | | |

### Examples 16-48

Following the procedure of Example 4 except that various compounds are substituted in lieu of the sodium thiosulfate thereof, stabilized aqueous solutions of hydroxamated polyacrylamide containing residual hydroxylamine are prepared. The compounds employed are 16) potassium thiosulfate; 17) ammonium thiosulfate; 18) calcium thiosulfate; 19) magnesium thiosulfate; 20) sodium-2-mercaptobenzothiazole; 21) 6-methyl-2-mercaptobenzothiazole; 22) potassium thiocyanate; 23) calcium thiocyanate; 24) ammonium thiocyanate and 25) magnesium thiocyanate; 26) 8-n-butyl-2-mercaptobenzothiazole; 27) sodium 2-mercaptothiazole; 28) 2-mercapto-4,5-cyclohexylthiazole; 29) 5-methyl-2-mercaptobenzimidazole; 30) 6-n-butyl-2-mercaptobenzimidazole; 31) 4,5-dimethyl-2-mercaptothiazoline; (32) 5-butyl-2-mercaptothiazoline; 33) N,N-dioctyldithiocarbamate; 34) N,N-diphenyldithiocarbamate; 35) tetra-n-butylthiuram disulfide; 36) ammonium dibutyldithiophosphate; 37) sodium diphenyldithiophosphate; 38) 2,5-dimethyl-hydroquinone; 39) monosodium hydroquinone; 40) dipotassium sulfide; 41) 4-quinolinol; 42) 2-methyl-8-quinolinol; 43) N,N'-diphenylthiourea; 44) ethylene thiourea; 45) 4-methyl-1,2-naphthoquinone; 46) 2-mercaptopropanol; 47) magnesium iodide and 48) ammonium iodide.

### Example 49-53

The procedure of Example 9 is again followed except that the acrylic acid thereof is replaced in the percentages given by 49) dimethylaminopropyl acrylamide (10%); 50) diallydimethylammonium chloride (25%); 51) methacrylic acid potassium salt (8%); 52) N-vinyl pyrrolidone (5%) and 53) 2-acrylamido-2-methylpropane sulfonic acid. Again stabilized hydroxamated polymer solutions are prepared.

### Example 54 (Comparative)

To 144 parts of a 30% hydroxylamine sulfate solution and 670 parts of water are added 46 parts of polyacrylamide at 40^{o}C. After mixing, 85 parts of 50% NaOH are added. The resultant hydroxamated polyacrylamide has a hydroxamate content of 46% and a Solution Viscosity of 6.6 mPa.s.

### Example 55

The procedure of Example 54 is repeated exactly except that 13 parts of sodium thiosulfate pentaahydrate are added to the hydroxylamine sulfate solution, using 660 parts of water. The resulting product has a Solution Viscosity of 7.7 mPa.s with a hydroxamate content of 48%.

### Examples 56-58

Example 9 is again followed except that the polymer is prepared from 56) acrylamide (80%) sodium acrylate (10%) and 2-acrylamido-2-methylpropane sulfonic acid (10)%; 57) methacrylic acid (60%), dimethylaminoethylmethacrylate (20%) and acrylamide (20%) and 58) vinylpyrrolidone (70%), acrylic acid (15%) and styrene (10%). In each instance, similar results are obtained.

## Claims

1. An aqueous solution of a water-soluble polymer, formed from one or more monomers containing a carbon-carbon double bond, and hydroxylamine, wherein the polymer is present in a concentration ranging from 0.1% to 95% polymer, and wherein the solution is stabilized against viscosity-lowering polymer degradation induced by said hydroxylamine by the presence of a stabilizer selected from:
(a) water-soluble alkali metal, alkaline earth metal and ammonium thiosulfate salts;
(b) 2-mercaptothiazole compounds of the formula: 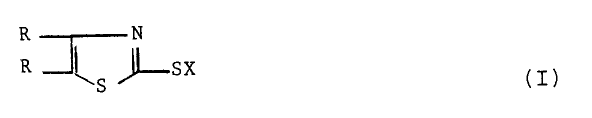 wherein each R represents hydrogen or a lower hydrocarbon radical, or the R substituents together form a substituted or unsubstituted alicyclic or aromatic ring, and X is hydrogen or a monovalent cation;
(c) water-soluble alkali metal, alkaline earth metal and ammonium thiocyanate salts;
(d) mercaptobenzimidazole compounds of the formula: 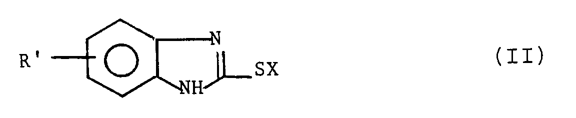 wherein R' represents a hydrogen atom or a lower alkyl radical and X represents hydrogen or a monovalent cation;
(e) mercaptothiazoline compounds of the formula: 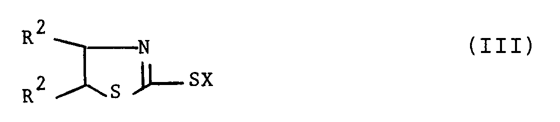 wherein R² and R³ are individually hydrogen or C₁₋₄ alkyl or together form an alicyclic ring and X represents hydrogen or a monovalent cation;
(f) N,N-dialkyldithiocarbamate compounds of the formula: 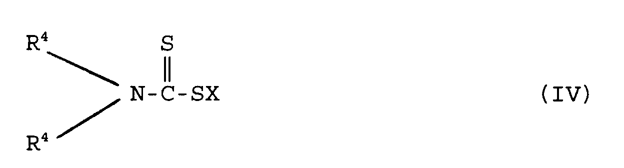 wherein each R⁴, individually, is a C₁₋₁₂ alkyl group or an aryl radical, and X is hydrogen or a monovalent cation;
(g) thiuram disulfide compounds of the formula: 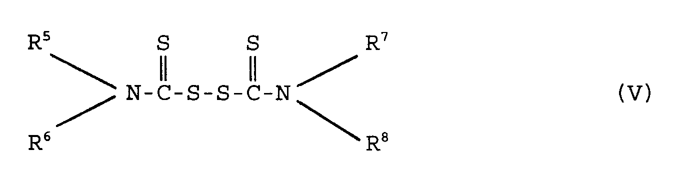 wherein each R⁵, R⁶, R⁷ and R⁸ is hydrogen or a C₁₋₁₀ alkyl group;
(h) dialkyl and diaryl dithiophosphate compounds of the formula: 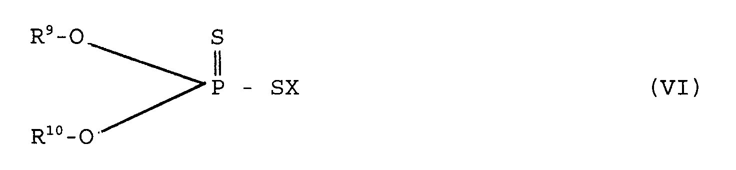 wherein R⁹ and R¹⁰ are individually C₁₋₁₂ alkyl groups or aromatic radicals, and X is hydrogen or a monovalent cation;
(i) hydroquinone compounds of the formula: 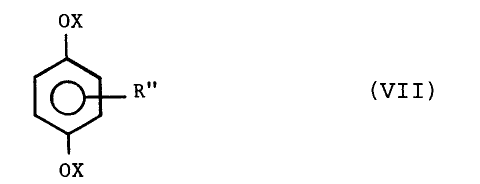 wherein R'' represents a hydrogen atom or a lower alkyl group, and X is hydrogen or a monovalent cation,
(j) hydrosulfide compounds;
(k) quinolinol compounds of the formula: 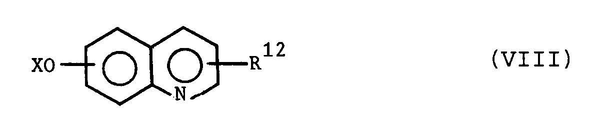 wherein R¹² represents one or more hydrogen atoms or lower hydrocarbon radicals;
(l) thiourea compounds of the formula: 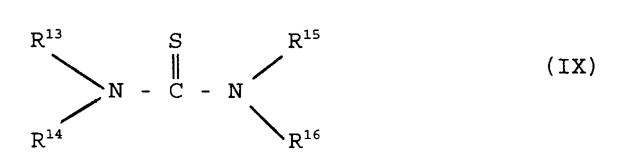 wherein R¹³, R¹⁴, R¹⁵ and R¹⁶ are each hydrogen, a C₁₋₁₀ alkyl group or an aryl radical;
(m) naphthoquinone compounds of the formulae: 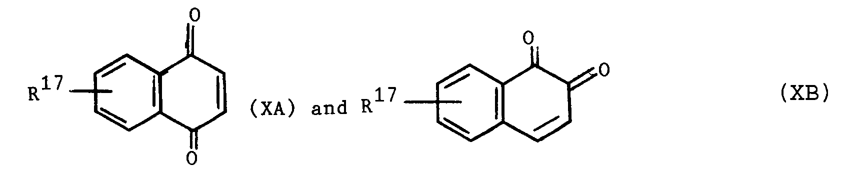 wherein R¹⁷ represents one or more hydrogen atoms or C₁₋₄ alkyl groups;
(n) mercaptoalkanol compounds of the formula:
(HSₐ―R¹⁸―(OH)_{b} (XI)
wherein R¹⁸ represents a polyvalent C₂₋₂₀ alkylene radical, and a and b are individually integers from 1 to 3 wherein the sum of a plus b does not exceed 4; and
(o) iodide salts,
such that the polymer has a solution viscosity loss of less than 50% of its initial value after the stabilized solution has been aged at 40°C for 90 days, wherein solution viscosity is defined as the viscosity, in cps, of a 0.1% solution of the polymer in 1M NaCl at 25°C using a Brookfield viscometer with the UL adaptor at 60 rpm.

2. A composition according to Claim 1, wherein said polymer is hydroxamated.

3. A composition according to Claim 1 or Claim 2, wherein said polymer is a homo- or co-polymer of acrylamide.

4. A composition according to any preceding claim, wherein said solution is in the form of a gel.

5. A composition according to any one of Claims 1-4, wherein said stabilizer is selected from said thiosulfates, said 2-mercaptothiazoles, said mercaptobenzimidazoles, said mercaptothiazolines, said N,N-dialkyldithiocarbamates and said thiuram dilsulfides.

6. A composition according to Claim 5, wherein said stabilizer is sodium thiosulfate.

7. A process for inhibiting the decomposition of an aqueous solution of a water-soluble polymer, formed from one or more monomers containing a carbon-carbon double bond, and which is present in a concentration from 0.1% to 95%, in the presence of hydroxylamine, which process comprises mixing said solution, said hydroxylamine and a stabilizer in order to provide a solution viscosity loss of the polymer of less than 50% of its initial value after the stabilized solution has been aged at 40°C for 90 days, wherein solution viscosity is defined as the viscosity, in cps, of a 0.1% solution of the polymer in 1M NaCl at 25°C using a Brookfield viscometer with the UL adaptor at 60 rpm, and wherein the stabilizer is selected from the stabilizers (a)-(o) defined in Claim 1.

8. The process of Claim 7, wherein said polymer is hydroxamated.

9. The process of Claim 7 or Claim 8, wherein said polymer is a homo- or co-polymer of acrylamide.

10. The process of any one of Claims 7-9, wherein the water-soluble polymer is in the form of a microdispersion.

11. The process of Claim 10, wherein said polymer in the microdispersion is in the form of a gel.

## Patentansprüche

1. Wäßrige Lösung eines wasserlöslichen Polymers, gebildet aus einem oder mehreren Monomeren, die eine Kohlenstoff-Kohlenstoff-Doppelbindung enthalten, und Hydroxylamin, wobei das Polymer in einer Konzentration im Bereich von 0,1 % bis 95 % Polymer anwesend ist und wobei die Lösung gegen viskositätserniedrigenden Polymerabbau stabilisiert ist, der durch das Hydroxylamin ausgelöst wird, in Anwesenheit eines Stabilisierungsmittels, das ausgewählt wird aus:
(a) einem wasserlöslichen Alkalimetall, Erdalkalimetall und Ammoniumthiosulfatsalzen;
(b) 2-Mercaptothiazolverbindungen der Formel: 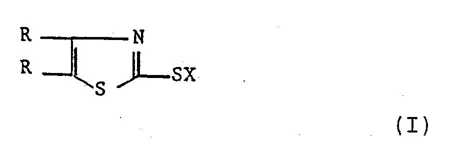 wobei jedes R Wasserstoff oder ein niederes Kohlenwasserstoffradikal darstellt oder die R-Substituenten zusammen einen substituierten oder nichtsubstituierten alicyclischen oder aromatischen Ring bilden und X Wasserstoff oder ein einwertiges Kation ist;
(c) einem wasserlöslichen Alkalimetall, Erdalkalimetall und Ammoniumthiocyanatsalzen;
(d) Mercaptobenzimidazolverbindungen der Formel: 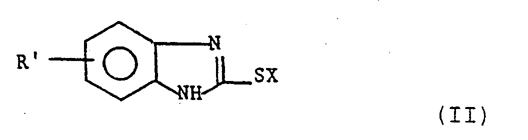 wobei R' ein Wasserstoffatom oder ein niederes Alkylradikal darstellt und X Wasserstoff oder ein einwertiges Kation darstellt;
(e) Mercaptothiazolinverbindungen der Formel: 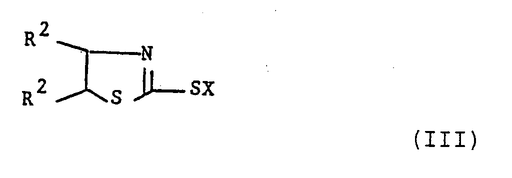 wobei R² und R² einzeln Wasserstoff oder C₁₋₄ Alkyl sind oder zusammen einen alicyclischen Ring bilden und X Wasserstoff oder ein einwertiges Kation darstellt;
(f) N,N-Dialkyldithiocarbamatverbindungen der Formel: 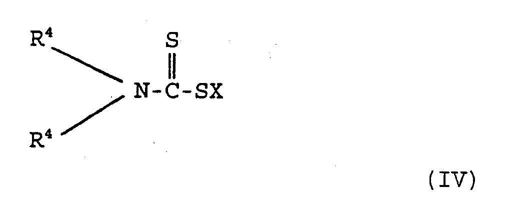 wobei jedes R⁴ einzeln eine C₁₋₁₂ Alkylgruppe oder ein Arylradikal ist und X Wasserstoff oder ein einwertiges Kation ist;
(g) Thiuramdisulfidverbindungen der Formel: 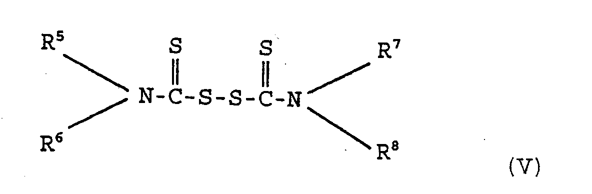 wobei jedes R⁵, R⁶, R⁷ und R⁸ Wasserstoff oder eine C₁₋₁₀ Alkylgruppe ist;
(h) Dialkyl- und Diaryldithiophosphatverbindungen der Formel: 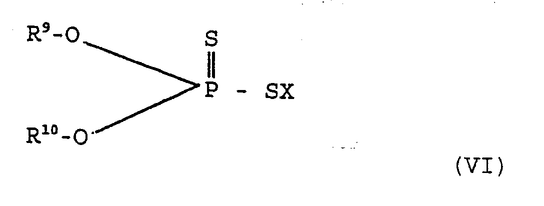 wobei R⁹ und R¹⁰ einzeln C₁₋₁₂ Alkylgruppen oder aromatische Radikale sind und X Wasserstoff oder ein einwertiges Kation ist;
(i) Hydrochinonverbindungen der Formel: 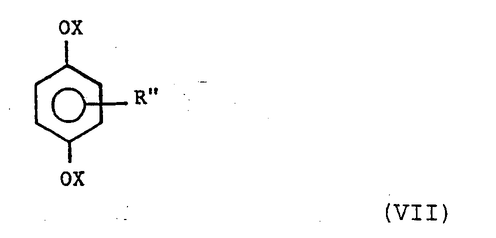 wobei R'' ein Wasserstoffatom oder eine niedere Alkylgruppe darstellt und X Wasserstoff oder ein einwertiges Kation ist,
(j) Hydrogensulfidverbindungen;
(k) Chinolinolverbindungen der Formel: 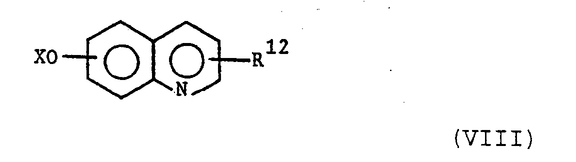 wobei R¹² ein oder mehrere Wasserstoffatome oder niedere Kohlenwasserstoffradikale darstellt;
(l) Thioureaverbindungen der Formel: 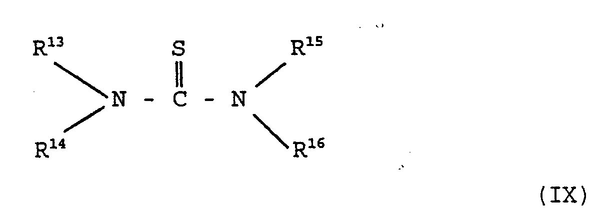 wobei R¹³, R¹⁴, R¹⁵ und R¹⁶ jeweils Wasserstoff, eine C₁₋₂₀ Alkylgruppe oder ein Arylradikal sind;
(m) Naphthochinonverbindungen der Formel: 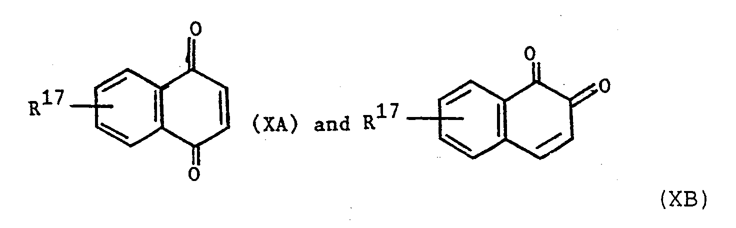 wobei R¹⁷ ein oder mehrere Wasserstoffatome oder C₁₋₄ Alkylgruppen darstellt;
(n) Mercaptoalkanolverbindungen der Formel:
(HS)ₐ--R¹⁸--(OH)_{b} (XI)
wobei R¹⁸ ein mehrwertiges C₂₋₂₀ Alkylenradikal darstellt und a und b einzeln Ganzzahlen von 1 bis 3 sind, wobei die Summe aus a plus b nicht mehr als 4 beträgt; und
(o) Iodidsalzen, so daß das Polymer einen Lösungsviskositätsverlust von weniger als 50 % seines Anfangswertes aufweist, nachdem die stabilisierte Lösung bei 40 °C 90 Tage lang gereift ist, wobei die Lösungsviskosität als die Viskosität in Zyklen pro Sekunde einer 0,1 %igen Lösung des Polymers in 1 M NaCl bei 25 °C unter Verwendung eines Brookfield Viskosimeters, dessen UL-Adaptor auf 60 U/min eingestellt ist, definiert ist.

2. Zusammensetzung nach Anspruch 1, wobei das Polymer hydroxamiert ist.

3. Zusammensetzung nach Anspruch 1 oder Anspruch 2, wobei das Polymer ein Homo- oder Kopolymer aus Acrylamid ist.

4. Zusammensetzung nach einem der vorhergehenden Ansprüche, wobei die Lösung in Gelform vorliegt.

5. Zusammensetzung nach einem der Ansprüche 1 - 4, wobei das Stabilisierungsmittel aus den Thiosulfaten, den 2-Mercaptothiazolen, den Merkaptobenzimidazolen, den Mercaptothiazolinen, den N,N-Dialkyldithiocarbamaten und den Thiuramdisulfiden ausgewählt ist.

6. Zusammensetzung nach Anspruch 5, wobei das Stabilisierungsmittel Sodiumthiosulfat ist.

7. Verfahren zur Verhinderung der Zersetzung einer wäßrigen Lösung eines wasserlöslichen Polymers, das aus einem oder mehreren Monomeren gebildet ist, die eine Kohlenstoff-Kohlenstoff-Doppelbindung enthalten, und das in einer Konzentration von 0,1 % bis 95 % vorliegt, in Anwesenheit von Hydroxylamin, wobei das Verfahren umfaßt: das Mischen der Lösung, des Hydroxylamins und eines Stabilisierungsmittels, um einen Lösungsviskositätsverlust des Polymers von weniger als 50 % seines Anfangswertes bereitzustellen, nachdem die stabilisierte Lösung bei 40 °C 90 Tage lang gereift ist, wobei die Lösungsviskosität als Viskosität in Zyklen pro Sekunde einer 0,1 %igen Lösung des Polymers in 1 M NaCl bei 25 °C unter Verwendung eines Brookfield Viskosimeters, dessen UL-Adaptor auf 60 U/min eingestellt ist, definiert ist, und wobei das Stabilisierungsmittel aus den Stabilisierungsmitteln (a) - (o) nach Anspruch 1 ausgewählt ist.

8. Verfahren nach Anspruch 7, wobei das Polymer hydroxamiert ist.

9. Verfahren nach Anspruch 7 oder Anspruch 8, wobei das Polymer ein Homo- oder Kopolymer aus Acrylamid ist.

10. Verfahren nach einem der Ansprüche 7 - 9, wobei das wasserlösliche Polymer in Mikrodispersionsform vorliegt.

11. Verfahren nach Anspruch 10, wobei das Polymer in der Mikrodispersion in Gelform vorliegt.

## Revendications

1. Solution aqueuse d'un polymère hydrosoluble, formé à partir d'un ou de plusieurs monomères contenant une double liaison carbone-carbone, et d'hydroxylamine, dans laquelle le polymère est présent en une concentration allant de 0,1 % à 95 % de polymère, et dans laquelle la solution est stabilisée contre une dégradation du polymère par diminution de la viscosité induite par ladite hydroxylamine en présence d'un stabilisant choisi parmi :
(a) les sels thiosulfate hydrosolubles de métaux alcalins, de métaux alcalino-terreux et d'ammonium ;
(b) les composés 2-mercaptothiazole de formule : 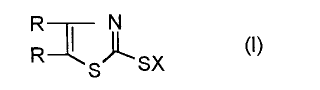 dans laquelle chaque R représente un atome d'hydrogène ou un radical hydrocarboné inférieur, ou les substituants R forment ensemble un noyau alicyclique ou aromatique substitué ou non substitué, et X est un atome d'hydrogène ou un cation monovalent ;
(c) les sels thiocyanate hydrosolubles de métaux alcalins, de métaux alcalino-terreux et d'ammonium ;
(d) les composés mercaptobenzimidazole de formule : 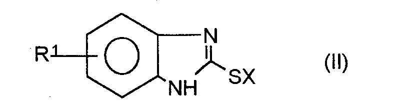 dans laquelle R' représente un atome d'hydrogène ou un radical alkyle inférieur et X représente un atome d'hydrogène ou un cation monovalent ;
(e) les composés mercaptothiazoline de formule : 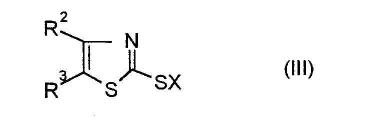 dans laquelle R² et R³ sont individuellement un atome d'hydrogène ou un groupe alkyle en C₁-C₄ ou forment ensemble un noyau alicyclique et X représente un atome d'hydrogène ou un cation monovalent ;
(f) les composés N,N-dialkyldithiocarbamate de formule : 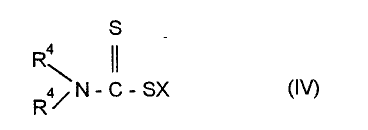 dans laquelle chaque radical R⁴ représente individuellement un groupe alkyle en C₁-C₁₂ ou un radical aryle, et X est un atome d'hydrogène ou un cation monovalent ;
(g) les composés disulfure de thiurame de formule : 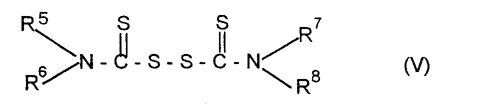 dans laquelle chaque radical R⁵, R⁶, R⁷ et R⁸ représente un atome d'hydrogène ou un groupe alkyle en C₁-C₁₀ ;
(h) les composés dithiophosphate de dialkyle et de diaryle de formule : 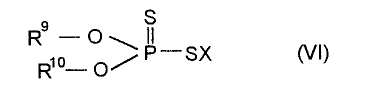 dans laquelle R⁹ et R¹⁰ représentent individuellement un groupe alkyle en C₁-C₁₂ ou un radical aromatique, et X est un atome d'hydrogène ou un cation monovalent ;
(i) les composés hydroquinone de formule : 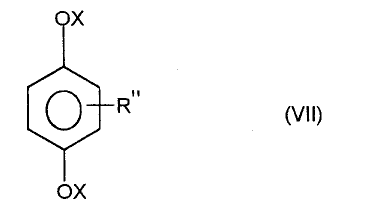 dans laquelle R'' représente un atome d'hydrogène ou un groupe alkyle inférieur, et X représente un atome d'hydrogène ou un cation monovalent ;
(j) les composés hydrosulfite ;
(k) les composés quinolinol de formule : 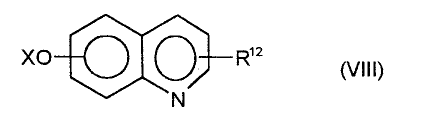 dans laquelle R¹² représente un ou plusieurs atomes d'hydrogène ou radicaux hydrocarbonés inférieurs ;
(l) les composés thiourée de formule : 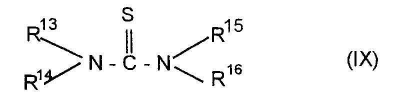 dans laquelle R¹³, R¹⁴, R¹⁵ et R¹⁶ représentent chacun un atome d'hydrogène, un groupe alkyle en C₁-C₁₀ ou un radical aryle ;
(m) les composés naphtoquinone de formules : 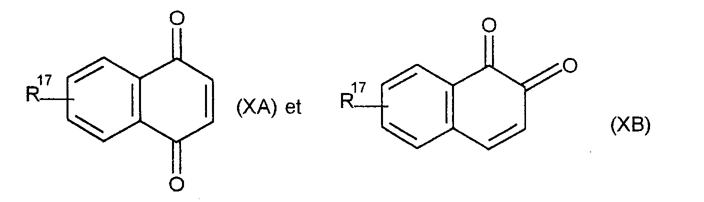 dans lesquelles R¹⁷ représente un ou plusieurs atomes d'hydrogène ou groupes alkyle en C₁-C₄ ;
(n) les composés mercaptoalcanol de formule :
(HS)ₐ-R¹⁸-(OH)_{b} (XI)
dans laquelle R¹⁸ représente un radical alkylène en C₂-C₁₀ polyvalent, et a et b sont individuellement un nombre entier de 1 à 3, et où la somme de a plus b ne dépasse pas 4 ; et
(o) les sels iodure,
de sorte que le polymère a une perte de viscosité en solution inférieure à 50 % de sa valeur initiale après que la solution stabilisée ait été vieillie à 40°C pendant 90 jours, où la viscosité en solution est définie comme étant la viscosité, en cP, d'une solution à 0,1 % du polymère dans NaCl 1M à 25°C à l'aide d'un viscosimètre Brookfield avec un adaptateur UL à 60 tours par minute.

2. Composition selon la revendication 1, dans laquelle ledit polymère est hydroxamylé.

3. Composition selon la revendication 1 ou la revendication 2, dans laquelle ledit polymère est un homo- ou un copolymère d'acrylamide.

4. Composition selon l'une quelconque des revendications précédentes, dans laquelle ladite solution est sous forme d'un gel.

5. Composition selon l'une quelconque des revendications 1 à 4, dans laquelle ledit stabilisant est choisi parmi lesdits thiosulfates, lesdits 2-mercaptothiazoles, lesdits mercaptobenzimidazoles, lesdites mercaptothiazolines, lesdits N,N-dialkyldithiocarbamates et lesdits disulfures de thiurame.

6. Composition selon la revendication 5, dans laquelle ledit stabilisant est le thiosulfate de sodium.

7. Procédé d'inhibition de la décomposition d' une solution aqueuse d'un polymère hydrosoluble, formé à partir d'un ou de plusieurs monomères contenant une double liaison carbone-carbone, et qui est présent en une concentration s'échelonnant de 0,1 % à 95 %, en présence d'hydroxylamine, procédé qui comprend le mélange de ladite solution, de ladite hydroxylamine et d'un stabilisant pour donner une perte de viscosité en solution du polymère inférieure à 50 % de sa valeur initiale après que la solution stabilisée ait été vieillie à 40°C pendant 90 jours, où la viscosité en solution est définie comme étant la viscosité, en cP, d'une solution à 0,1 % du polymère dans NaCl 1M à 25°C à l'aide d'un viscosimètre Brookfield avec un adaptateur UL à 60 tours par minute, et dans lequel le stabilisant est choisi parmi les stabilisants (a)-(o) définis dans la revendication 1.

8. Procédé selon la revendication 7, dans lequel ledit polymère est hydroxamylé.

9. Procédé selon la revendication 7 ou la revendication 8, dans lequel ledit polymère est un homo- ou un copolymère d'acrylamide.

10. Procédé selon l'une quelconque des revendications 7 à 9, dans lequel le polymère soluble dans l'eau est sous forme d'un microdispersion.

11. Procédé selon la revendication 10, dans lequel ledit polymère dans la microdispersion est sous forme.
